Europäisches Patentamt

European Patent Office

Office européen des brevets

(19)

(11) Veröffentlichungsnummer : **0 295 522 B1**

# (12) EUROPÄISCHE PATENTSCHRIFT

(45) Veröffentlichungstag der Patentschrift :
22.05.91 Patentblatt 91/21

(51) Int. Cl.⁵ : **C09K 11/85**

(21) Anmeldenummer : 88108994.0

(22) Anmeldetag : 06.06.88

(54) **Stimulierbarer Speicherleuchtstoff.**

(30) Priorität : 15.06.87 DE 3719918

(43) Veröffentlichungstag der Anmeldung :
21.12.88 Patentblatt 88/51

(45) Bekanntmachung des Hinweises auf die
Patenterteilung :
22.05.91 Patentblatt 91/21

(84) Benannte Vertragsstaaten :
**BE DE FR GB IT NL**

(56) Entgegenhaltungen :
EP-A- 0 021 342
EP-A- 0 083 085

(56) Entgegenhaltungen :
EP-A- 0 144 772
EP-A- 0 148 507
EP-A- 0 151 494
EP-A- 0 159 014
DE-A- 2 654 387

(73) Patentinhaber : **Siemens Aktiengesellschaft
Wittelsbacherplatz 2
W-8000 München 2 (DE)**

(72) Erfinder : **Knüpfer, Wolfgang, Dr.
Rudelsweiherstrasse 14
W-8520 Erlangen (DE)**
Erfinder : **Mengel, Monika, Dr.
Lerchenbühl 9C
W-8520 Erlangen (DE)**

Figuren dargestellten Ausführungsbeispielen näher erläutert. Es zeigen :

Fig. 1 eine bekannte Röntgendiagnostikeinrichtung zum Einsatz des mit dem erfindungsgemäßen Leuchtstoff beschichteten Speicherleuchtschirms,

Fig. 2 schematisch die Durchführung des Herstellungsverfahrens und

Fig. 3 Stimulationsspektren verschiedener Speicherleuchtstoffe auf der Basis von BaFBr : Eu in Abhängigkeit des Cs-Gehaltes.

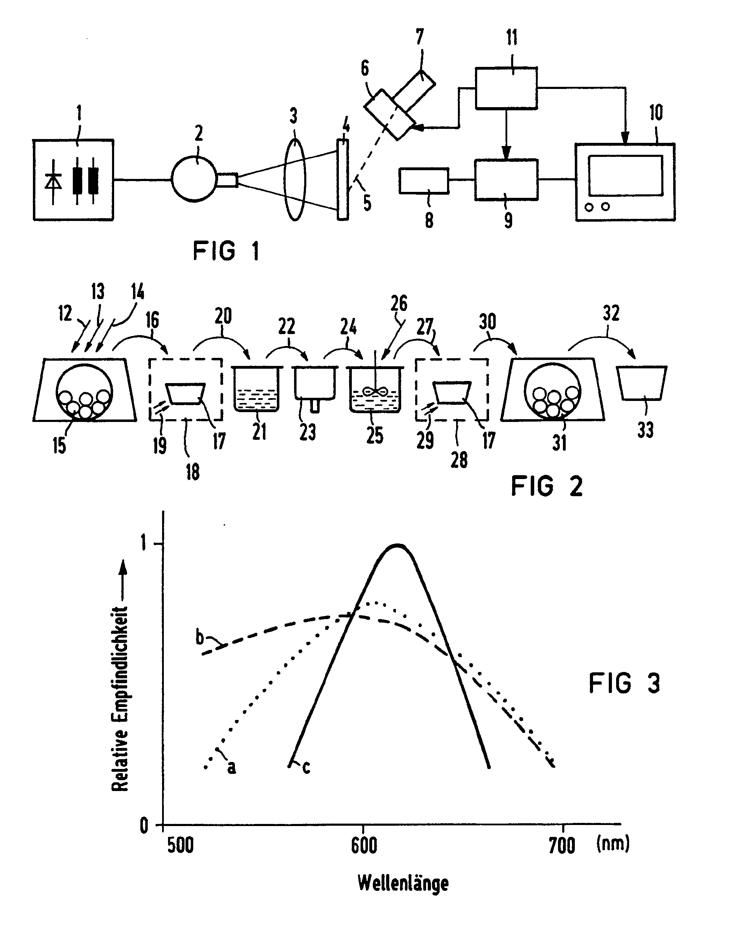

In der Fig. 1 ist eine Röntgendiagnostikeinrichtung für den Einsatz eines erfindungsgemäßen Leuchtstoffes dargestellt, die einen Hochspannungsgenerator 1 aufweist, der eine Röntgenröhre 2 speist, die Röntgenstrahlen aussendet, die einen Patienten 3 durchdringen. Auf einem Lumineszenz-Speicherleuchtschirm 4 der den erfindungsgemäßen Leuchtstoff enthält, fallen die Röntgenstrahlen, die durch den Patienten 3 entsprechend seiner Transparenz geschwächt wurden. Dieses auffallende Strahlenbild erzeugt in dem Speicherleuchtschirm 4 Defektelektronen, die in einer Potentialfalle (Trap) des Leuchtstoffes gespeichert werden, so daß in dem Speicherleuchtschirm 4 ein latentes Bild gespeichert ist.

Zur Wiedergabe des latenten Bildes wird der Speicherleuchtschirm 4 von einem Laserstrahl 5 bildpunktweise abgetastet, der von einem Laser 7, beispielsweise einem He-Ne-Laser, erzeugt und von der Ablenkvorrichtung 6 über die Fläche des Leuchtschirmes 4 zeilenweise abgelenkt wird. Die Ablenkvorrichtung 6 für den Laser 7 kann beispielsweise aus einem Ablenkspiegel für die vertikale und einem elektrooptischen Strahlenablenker für die horizontale Ablenkung bestehen. Die vertikale Ablenkung kann aber auch durch Parallel-Vorschub des Leuchtschirmes 4 senkrecht zur Abtastzeile erreicht werden. Durch die Abtastung mit dem Laserstrahl 5 werden alle auf dem Speicherleuchtschirm 4 liegenden Bildpunkte zeilenweise nacheinander angeregt und zum Leuchten gebracht. Ein Detektor 8 erfaßt das vom Speicherleuchtschirm 4 emittierte Licht und wandelt die Helligkeit der abgetasteten Bildpunkte in ein elektrisches Signal um, das einer Wiedergabeschaltung 9 zugeführt wird, die aus den einzelnen analogen Ausgangssignalen des Detektors 8 ein Videosignal zur Darstellung auf einem Monitor 10 erzeugt. Die Wiedergabeschaltung 9 kann Bildspeicher, Verarbeitungsschaltungen und Wandler enthalten. Eine Steuereinrichtung 11 erzeugt die Steuertakte zur Synchronisation der Ablenkvorrichtung 6, der Wiedergabeschaltung 9 und des Monitors 10.

Der Leuchtstoff kann in üblicher Weise hergestellt werden, indem gemäß der gewünschten Zusammensetzung abgewogene Barium-, Magnesium- und Calciumhalogenide als Ausgangsverbindungen genommen werden (Pfeil 12), wobei das eigentliche Wirtsgitter durch die Zumischung (Pfeil 13) von Bariumfluorid ($BaF_2$) zu Bariumbromid ($BaBr_2$) bzw. Bariumchlorid ($BaCl_2$) oder Bariumjodid ($BaI_2$) im Molverhältnis 1 : 1,1 bis 1 : 1,3 realisiert wird. Dieses Produkt wird unter Zusatz (Pfeil 14) von Boroxid ($B_2O_3$) oder Ammoniumhalogeniden mit 0,01 bis 0,1 Gewichtsprozent als Flußmittel für den ersten Glühprozess und Europiumoxid ($Eu_2O_3$) mit 0,1 bis 0,5 Gewichtsprozent als Aktivator in einer Kugelmühle 15 in einer Zeit von 8 bis 20 Stunden gemahlen.

Diese gemahlene Mischung wird, wie durch Pfeil 16 angedeutet in einem Tiegel 17, der aus Graphit, Silizium- ($SiO_2$) oder Aluminiumoxid ($Al_2O_3$) besteht, in einen Rohrofen 18 überführt und bei einer Temperatur von 700°C bis 1000°C bei einer Glühzeit von 1 bis 4 Stunden unter einer laminar strömenden, reduzierenden Atmosphäre 19 geglüht. Die Atmosphäre 19 kann beispielsweise eine $N_2$-$H_2$-Atmosphäre mit einem $N_2$ : $H_2$-Verhältnis zwischen 9 und 90 sein. Sie weist eine Durchflußgeschwindigkeit von 40 bis 200 l pro Stunde auf.

Nach Abkühlung des Leuchtstoffes wird der Leuchtstoff, wie durch Pfeil 20 angedeutet, in ein Becherglas 21 überführt und zu einer Suspension in einer Äthanol/Wasser- oder Methanol/Wasser-Mischung versetzt. Nach Überführung (Pfeil 22) des Leuchtstoffes in eine Filtriervorrichtung 23 wird dieser gefiltert und getrocknet. Danach wird er gemäß Pfeil 24 in ein Becherglas 25 überführt, in dem der Leuchtstoff mit einem Flußmittel aus der Reihe der Alkalihalogenid-Verbindung, vorzugsweise Cäsiumfluorid (CsF), Cäsiumchlorid (CsCl), Cäsiumbromid (CsBr) oder Cäsiumjodid (CsI) oder Rubidiumfluorid (RbF), Rubidiumchlorid (RbCl), Rubidiumbromid (RbBr) oder Rubidiumjodid (RbI) mit 0,01 bis 0,1 Gewichtsprozent versetzt (Pfeil 26) und vermischt wird. Anschließend wird der Leuchtstoff, wie durch Pfeil 27 angedeutet, in dem Tiegel 17 in einen Rohrofen 28 überführt und ein zweites Mal bei 500°C bis 900°C ebenfalls in einer laminar strömenden, reduzierenden Atmosphäre 29 geglüht. Daraufhin kann gemäß der Andeutung durch einen Pfeil 30 der Glühkuchen in einer Mühle 31 gebrochen und schließlich, wie durch den weiteren Pfeil 32 angedeutet, in ein Sieb 33 gebracht werden. Der so erhaltene Leuchtstoff wird zur Prüfung in bekannter Weise zu einem Leuchtschirm verarbeitet.

Die Eigenschaften bezüglich des Stimulationsspektrums dieses derart hergestellten Leuchtstoffes sind in Fig. 3 dargestellt. Zugrundegelegt ist ein ($Ba_{1-a-b-x}$ $Mg_a$ Ca $A_{2x}$) FX : y Eu-Speicherleucht stoff, der mit verschiedenen Alkalimetallkonzentrationen versehen ist. Bei der Herstellung wird so verfahren, daß die Glühzeit des zweiten Glühprozesses so bemessen ist, daß das vor dem Glühen eingegebene Alkalimetall in Form einer Halogenverbindung um mindestens einen Faktor 100 in der Molkonzentration während des Glühprozesses reduziert wird. Dies ist

5. Process according to claim 4, characterised in that a fluxing agent additive of alkali halides is added to the storage phosphor before the second annealing process.

6. Process according to claim 4 or 5, characterised in that the process step during the second annealing process is so designed that after the end of the second annealing process if possible no alkali halide at all is contained in the storage phosphor so that for the mole ratio of x(product)/(initial weight)< 0.01 wherein x(product) characterises the phosphor composition after two annealing processes and x(initial weight) is the phosphor after the first mixing process.

## Revendications

1. Substance luminescente stimulable à mémorisation à base de fluorohalogénure de baryum, dopé par un ou plusieurs lanthanides, caractérisée par le fait que pour la préparation de la substance luminescente à mémorisation, on y ajoute au moins un composé formé d'un halogénure alcalin de sorte que l'intensité d'émission du spectre de stimulation est située de préférence dans la gamme des longueurs d'onde allant de 575 nm à 650 nm, et que la formule brute est $(Ba_{1-z-x} Me_z A_{2x})$ FX : $yLa^{2+}$, Me étant au moins un élément choisi dans le groupe incluant Mg, Ca, Sr, Zn et Cd, X étant au moins un halogène choisi dans le groupe incluant Cl, Br et I, A au moins un métal alcalin, La au moins un élément choisi dans le groupe incluant Eu, Tb, CE, Tm et Yb, et z, x et y étant des nombres satisfaisant aux conditions :
$0 \leq z \leq 0,2, 0 < x \leq 10^{-4}$ et $0 < y \leq 0,1$.

2. Substance luminescente à mémorisation suivant la revendication 1, caractérisée par le fait que la formule brute est
$(Ba_{1-a-b-x} Mg_a Ca_b A_{2x})$ FX : y $Eu^{2+}$, X étant au moins un halogène choisi dans le groupe incluant Cl, Br et I, A au moins un métal alcalin choisi dans la série Rb et Cs et a, b, x et y étant des nombres satisfaisant aux conditions :
$0 \leq a \leq 0,1, 0 \leq b \leq 0,1, 0 < x \leq 10^{-4}$ et $0 < y \leq 0,1$.

3. Utilisation de la substance luminescente à mémorisation suivant l'une des revendications 1 et 2 dans la couche luminescente d'une plaque-mémoire d'images.

4. Procédé pour fabriquer une substance luminescente à mémorisation suivant l'une des revendications 1 à 3, caractérisé par le fait qu'on prépare la substance luminescente à mémorisation en deux opérations successives de recuit dans une atmosphère réductrice à écoulement laminaire.

5. Procédé suivant la revendication 4, caractérisé par le fait qu'avant le second processus de recuit, on ajoute un additif formant fondant, constitué par des halogénures alcalins à la substance luminescente à

mémorisation.

6. Procédé suivant la revendication 4 ou 5, caractérisé par le fait qu'on exécute la conduite du processus lors du second processus de recuit, de telle sorte qu'à la fin de ce second processus de recuit, la substance luminescente à mémorisation ne contient plus aucun halogénure alcalin, en sorte que pour le rapport molaire on a x(produit)/x(prise d'essai) < 0,01, x(produit) étant la composition de la substance luminescente après deux opérations de recuit et x(prise d'essai) la substance luminescente après la première opération de mélange.

FIG 1

FIG 2

FIG 3

Relative Empfindlichkeit

Wellenlänge